# EUROPÄISCHE PATENTSCHRIFT

(11) **EP 0 393 324 B1**
(45) Veröffentlichungstag und Bekanntmachung des Hinweises auf die Patenterteilung: **28.04.1993**
(21) Anmeldenummer: 90103433.0
(22) Anmeldetag: 22.02.1990
(51) Int. Cl.: A61C 8/00

(54) **Befestigungsvorrichtung für Suprastrukturen**
Fixation device for superstructures
Dispositif de fixation pour superstructures

(30) Priorität: 19.04.1989 DE 8904919 U
(43) Veröffentlichungstag der Anmeldung: 24.10.1990
(73) Patentinhaber: ZL Microdent-Attachment GmbH, D-58339 Breckerfeld (DE)
(72) Erfinder:
(74) Vertreter: Dörner, Lothar, Dipl.-Ing.

(56) Entgegenhaltungen:
- DE-A- 3 736 978
- DE-C-37 266 16
- US-A- 3 748 739

## Beschreibung

### Technisches Gebiet:

Die Erfindung betrifft eine Befestigungsvorrichtung für Suprastrukturen, bei der jeweils zwei Schraubenimplantate mittels eines Stegs verblockt sind, auf den eine Stegprothese aufbaubar ist.

Bei der Pfostenverankerung zur Eingliederung zahnärztlicher Suprastrukturen, wie z.B. Brücken oder Verstrebungen, werden Schraubenimplantate nach einer Tiefenbohrung in den Kiefer eingeschraubt.

### Stand der Technik:

Bei einer bekannten Befestigungsvorrichtung für Suprastrukturen (US - A - 3 748 739) besteht jeder Steg aus fünf Teilen, einschließlich Abdeckungen aus sieben Teilen: Zwei Stegteile sind durch einen Verbindungsstift nach Art eines Drehgelenks verbunden. An dem dem Verbindungsstift abgewandten Ende ist in jeden Stegteil ein abgedeckter Gewindestift eingeschraubt, der Rechtsund Linksgewinde aufweist. Andererseits ist jeder Gewindestift in ein Gleitteil geschraubt, das seinerseits bezogen auf das Schraubenimplantat fixierbar ist.

### Darstellung der Erfindung:

Die in den Patentansprüchen beschriebene Erfindung löst die Aufgabe, eine Befestigungsvorrichtung der eingangs genannten Art so auszubilden, daß sie lötlos - jede Lötstelle ist eine Korrosionsstelle -, spannungslos - das Auftreten von Spannungen erschwert den Aufbau der Suprastruktur - und universell für jedes Implantatsystem einsetzbar ist.

Bei der Erfindung erfolgt die Verbindung zwischen Steg und Schraubenimplantat mit Hilfe eines Kugelgelenks. Damit ist die Verbindung einmal lötlos. Zum anderen gestattet sie die unterschiedlichsten Winkelstellungen des Stegs zu dem Schraubenimplantat. Der Steg selbst ist in Axialrichtung stufenlos verstellbar. Er kann also vom Zahnarzt im Mund des Patienten eingesetzt und angepaßt werden. Jedes Implantatsystem, bei dem das einzelne Schraubenimplantat mit dem dem Steg zugeordneten Teil des Kugelgelenks versehen ist, kann verwendet werden. Dabei kann dieses Teil des Kugelgelenks in einem auf den Kopf des Schraubenimplantats aufsetzbaren Aufbau untergebracht sein. Vorzugsweise bestehen alle Teile der Erfindung aus Titan, womit nur noch eine Legierung verwendet wird, was die Verarbeitung vereinfacht. Jede andere biocompatible Legierung ist aber verwendbar.

### Kurze Beschreibung der Zeichnungen:

Vier Ausführungsbeispiele der Erfindung sind in der Zeichnung dargestellt und werden im folgenden näher beschrieben. Es zeigen:

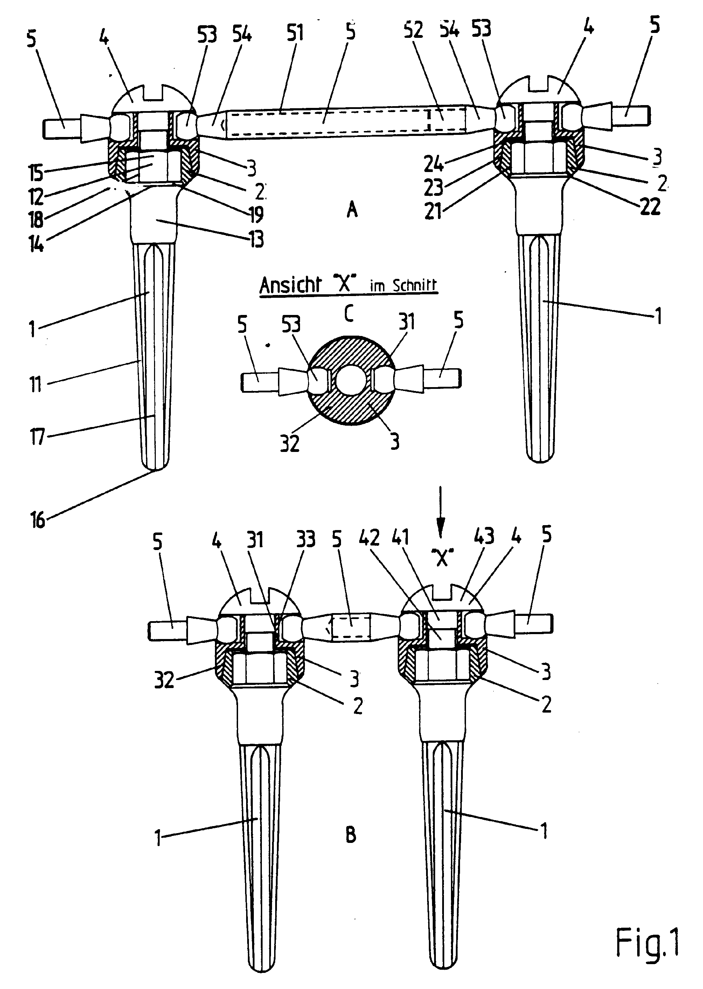

- Figuren 1 bis 4: unterschiedliche Ausführungen von Befestigungsvorrichtungen für Suprastrukturen, wobei jeweils
- Figur A: die Befestigungsvorrichtung mit horizontal verlaufendem langen Steg,
- Figur B: die Befestigungsvorrichtung mit horizontal verlaufendem kurzen Steg,
- Figur C: eine Ansicht/einen Horizontalschnitt der Befestigungsvorrichtung in Richtung X in Figur B;
- Figur D: die Befestigungsvorrichtung mit schräg verlaufendem langen Steg;
- Figur E: die Befestigungsvorrichtung mit schräg verlaufendem kurzen Steg;
- Figur F: eine Ansicht/einen Horizontalschnitt der Befestigungsvorrichtung in Richtung X in Figur E

darstellen.

### Bester Weg zur Ausführung der Erfindung:

Jede der als Ausführungsbeispiel gewählten Befestigungsvorrichtungen weist Schraubenimplantate 1 auf, auf deren Kopf eine Kappe 2 aufgebracht ist, die von einem Aufbau 3 übergriffen ist, der zusammen mit der Kappe 2 mittels einer in das Schraubenimplantat 1 axial eingebrachten Schraube 4 fixiert ist und von dem jeweils zwei Schraubenimplantate 1 verbindende Stege 5 radial abstreben. Über die Stege 5 und die Schraubenimplantate 1 wird eine nicht dargestellte Stegprothese aufgebaut.

Das in allen Ausführungsbeispielen verwendete Schraubenimplantat 1 weist einen in einen nicht dargestellten Kiefer einschraubbaren Gewindeteil 11 sowie einen okklusalen Aufbaupfeiler auf, der aus einem Kopf 12 und einem zwischen dem Kopf 12 und dem Gewindeteil 11 vorgesehenen Hals 13 gebildet ist. Am Übergang zwischen dem Kopf 12 und dem Hals 13 ist eine Schulter 14 vorgesehen. In den Kopf 12 und teilweise in den Hals 13 ist ein Innengewinde 15 eingebracht. Der Gewindeteil 11 ist konisch von seinem freien Ende 16 aus sich gleichbleibend vergrößernd ausgebildet. Am freien Ende 16 ist der Gewindeteil 11 abgerundet ausgebildet. Zwischen dem Hals 13 und dem freien Ende 16 ist der Gewindeteil 11 mit einer axial verlaufenden Rinne 17 versehen. Der Hals 13 hat einen Zylindermantel als Außenfläche. Der Kopf 12 ist mit einem Außenmehrkant 18 versehen. Die Schulter 14 zwischen dem Kopf 12 und dem Hals 13 hat einen größeren Durchmesser als letzterer. Auf der dem Kopf 12 zugewandten Seite ist die Schulter als ebene Schrägfläche 19 ausgeführt. Auf der dem Hals 13 zugewandten Seite ist die Schulter nach Art einer Trompetenöffnung abgerundet ausgeführt.

Weitere Einzelheiten des Schraubenimplantats 1, insbesondere des Gewindeteils 11, sind in der DE-U-89 03 050 beschrieben und dargestellt. Die Befestigungsvorrichtung nach der Erfindung ist aber auch mit anderen Schraubenimplantaten ausführbar.

Die Innenfläche der Kappe 2 ist als an den Außenmehrkant 18 des Schraubenimplantats 1 angepaßter Innenmehrkant 21 ausgeführt. Ihre dem Hals 13 zugewandte Stirnfläche 22 ist innen an die Schrägfläche 19 angepaßt; außen bildet sie die Verlängerung der Schulter 14. Die Außenfläche der Kappe 2 ist als Konus 23 ausgebildet. Die dem Hals 13 abgewandte Stirnfläche 24 ist eben.

Die Schraube 4 durchsetzt mit ihrem Schraubenbolzen 41 den Aufbau 3. Mit ihrem Bolzengewinde 42 ist die Schraube 4 in das Innengewinde 15 geschraubt. Mit ihrem Schraubenkopf 43 liegt die Schraube 4 an der äußeren Stirnseite des Aufbaus 3 an. Sie hält den Aufbau 3 und die Kappe 2 in ihrer Lage.

Jeder Steg 5 ist aus zwei Teilen gebildet, die in Axialrichtung gegeneinander stufenlos verstellbar sind. Der eine Teil des Stegs 5 ist als Hülse 51, der andere Teil als in die Hülse 51 einbringbarer Bolzen 52 ausgebildet. Jeder Teil 51, 52 ist am freien Ende als Kugelkopf 53 ausgebildet, der einen Teil eines Kugelgelenks bildet. Bei dem in Figur 1 dargestellten Ausführungsbeispiel ist der Kugelkopf 53 senkrecht zur Axialrichtung der Hülse 51/des Bolzens 52 abgeflacht. Der Übergang von dem Kugelkopf 53 in die Hülse 51/den Bolzen 52 ist von einem Kegelstumpf 54 gebildet, dessen größerer Durchmesser gleich dem Außendurchmesser der Hülse 51 ist. Abhängig davon, ob zwei miteinander zu verbindende Schraubenimplantate 1 einen größeren oder kleineren Abstand haben, wird die Länge der Hülse 51 gewählt, wie der Vergleich der jeweiligen Figuren A und B sowie D und E zeigt. Der Feinabstand der Schraubenimplantate 1 wird dann durch das Maß des Einbringens des Bolzens 52 in die Hülse 51 bestimmt.

Es kann mittig eine Hülse vorgesehen sein, in die von beiden Seiten je ein Bolzen 52 eingebracht wird. Die Hülse 51 kann eine Gewindehülse sein, in die der dann als Gewindebolzen ausgebildete Bolzen 52 schraubbar ist.

Der Aufbau 3 ist auf dem Kopf 12 des Schraubenimplantats 1 befestigt. In dem Aufbau 3 ist der andere Teil des Kugelgelenks vorgesehen, dessen einer Teil von dem Kugelkopf 53 gebildet ist. Der an dem Aufbau 3 vorgesehene Teil des Kugelgelenks hat die Gestalt einer in den Aufbau 3 eingelassenen Kugelpfanne 31. In jedem Aufbau 3 sind an diametral gegenüberliegenden Seiten Kugelpfannen 31 eingelassen. Der Aufbau 3 nimmt im Bereich seiner einen Stirnseite die Kappe 2 auf. Im Bereich seiner anderen Stirnseite ist der Aufbau 3 mit den Kugelpfannen 31 versehen.

Bei dem in den Figuren 1 bis 3 dargestellten Ausführungsbeispielen ist der Aufbau 3 als rotationssymmetrischer Hohlkörper 32 ausgebildet.

Bei dem in Figur 1 dargestellten Ausführungsbeispiel sind die Kugelpfannen 31 nach Art von axial verlaufenden Rinnen 33 kreisförmigen Querschnitts ausgebildet. Jede Rinne ist von der schraubenseitigen Stirnseite des rotationssymmetrischen Hohlkörpers 32 eingelassen. Am schraubenseitigen Ende ist die Kugelpfanne 31 von dem Schraubenkopf 43 gebildet.

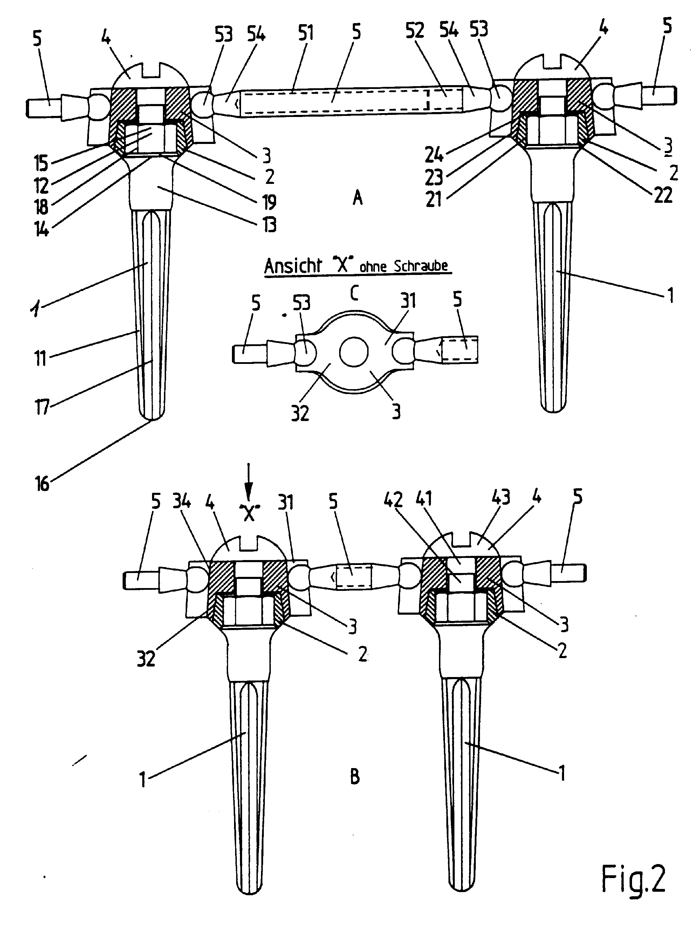

Bei dem in Figur 2 dargestellten Ausführungsbeispiel sind die Kugelpfannen 31 nach Art von axial konisch verlaufenden Rinnen 34 kreisförmigen Querschnitts ausgebildet. Die Rinnen 34 sind radial an den rotationssymmetrischen Hohlkörper 32 angeformt.

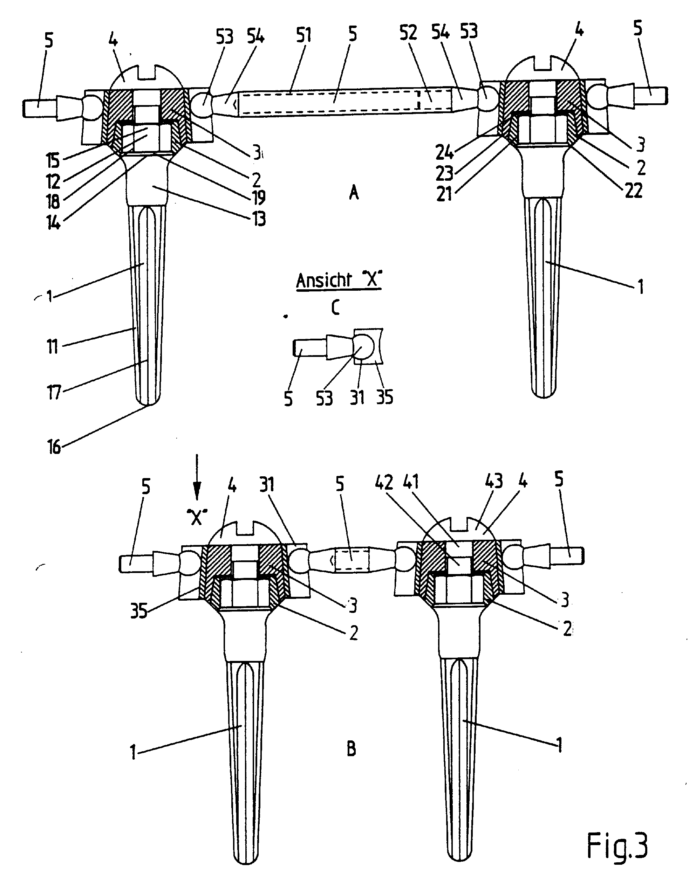

Bei dem in Figur 3 dargestellten Ausführungsbeispiel sind die Kugelpfannen 31 nach Art von axial konisch verlaufenden Rinnen 35 kreisförmigen Querschnitts ausgebildet, die an dem rotationssymmetrischen Hohlkörper 32 radial befestigt sind.

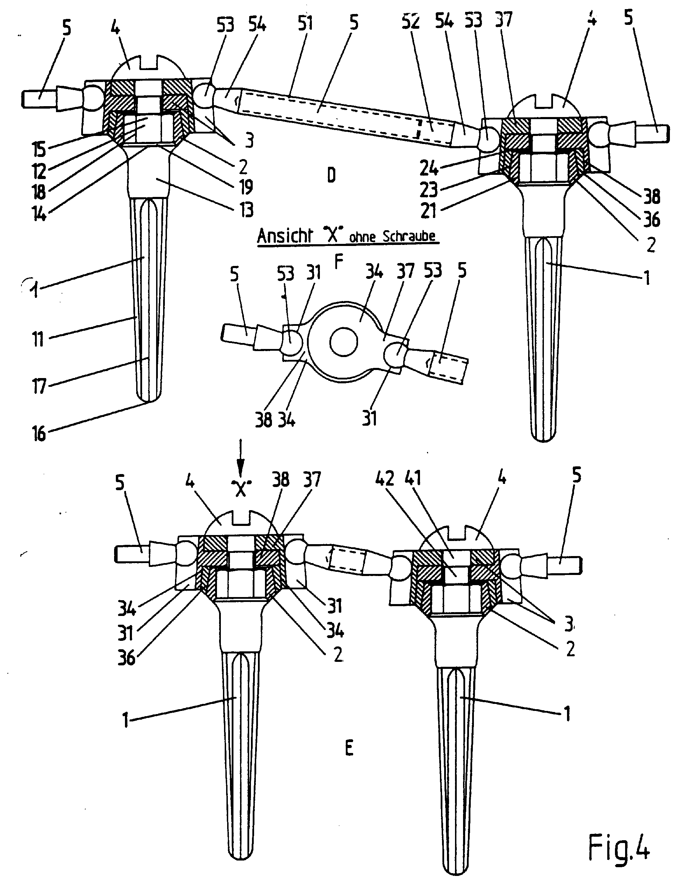

Bei dem in Figur 4 dargestellten Ausführungsbeispiel ist der Aufbau 3 von drei in Axialrichtung nebeneinander angeordneten Ringen gebildet. Der erste Ring ist als Stützring 36 ausgebildet und übergreift die Kappe 2. Der zweite und dritte Ring sind als Lagerring 37, 38 ausgebildet. An jeden Lagerring 37,38 ist jeweils eine axial konisch verlaufende Rinne 34 kreisförmigen Querschnitts radial angeformt. Bei dem Lagerring 37 strebt die Rinne 34 nach einer Seite ab; bei dem Lagerring 38 nach beiden Seiten.

Wie der Vergleich der jeweiligen Figuren A bis C mit den Figuren D bis F zeigt, sind mit der Befestigungsvorrichtung nach der Erfindung nicht nur unterschiedliche Abstände der Schraubenimplantate im Großen und im Kleinen einstellbar; sondern auch unterschiedliche Höhen und Richtungen ihrer Köpfe; abhängig von dem Kiefer des Patienten, in den eine Suprastruktur eingepflanzt wird.

### Gewerbliche Verwertbarkeit:

Die Befestigungsvorrichtung ist anwendbar bei zahnärztlichen Suprastrukturen, z.B. bei Brücken oder Verstrebungen.

## Patentansprüche

1. Befestigungsvorrichtung für Suprastrukturen, bei der jeweils zwei Schraubenimplantate (1) mittels eines Stegs (5) verblockt sind, auf den eine Stegprothese aufbaubar ist, dadurch gekennzeichnet, daß jeder Steg (5) nur aus zwei Teilen gebildet ist, die in Axialrichtung gegeneinander stufenlos verstellbar sind, und daß die beiden Teile an ihren freien Enden jeweils als Teil eines Kugelgelenks (31, 53) ausgebildet sind, dessen anderer Teil am Kopf (12) jedes Schraubenimplantats (1) vorgesehen ist

2. Befestigungsvorrichtung nach Anspruch 1, dadurch gekennzeichnet, daß der eine Teil des Stegs (5) als Hülse (51), der andere Teil als in die Hülse (51) einbringbarer Bolzen (52) ausgebildet ist und beide Teile an ihrem freien Ende als Kugelkopf (53) ausgebildet sind, von denen jeder in einer am Kopf (12) des Schraubenimplantats (1) angebrachten Kugelpfanne (31) gelagert ist.

3. Befestigungsvorrichtung nach Anspruch 2, dadurch gekennzeichnet, daß der Kugelkopf (53) senkrecht zur Axialrichtung der Hülse (51)/des Bolzens (52) abgeflacht ist.

4. Befestigungsvorrichtung nach Anspruch 2 oder 3, dadurch gekennzeichnet, daß der Übergang von dem Kugelkopf (53) in die Hülse (51)/ den Bolzen (52) von einem Kegelstumpf (54) gebildet ist, dessen größerer Durchmesser gleich dem Außendurchmesser der Hülse (51) ist.

5. Befestigungsvorrichtung nach einem der Ansprüche 2 bis 4, dadurch gekennzeichnet, daß auf dem Kopf (12) des Schraubenimplantats (1) ein Aufbau (3) befestigt ist, in den an diametral gegenüberliegenden Seiten je eine Kugelpfanne (31) eingelassen ist.

6. Befestigungsvorrichtung nach Anspruch 5, dadurch gekennzeichent, daß auf dem Kopf (12) des Schraubenimplantats (1) eine Kappe (2) angeordnet ist, die der Aufbau (3) übergreift und die von einer mit ihrem Schraubenkopf (43) an der äußeren Stirnseite des Aufbaus (3) anliegenden und den Kopf (12) des Schraubenimplantats (1) axial durchsetzenden Schraube (4) fixiert ist.

7. Befestigungsvorrichtung nach Anspruch 6, dadurch gekennzeichnet, daß der Aufbau (3) als rotationssymmetrischer Hohlkörper (32) ausgebildet ist, der im Bereich seiner einen Stirnseite die Kappe (2) aufnimmt und im Bereich seiner anderen Stirnseite mit den Kugelpfannen (31) versehen ist.

8. Befestigungsvorrichtung nach Anspruch 7, dadurch gekennzeichnet, daß die Kugelpfannen (31) nach Art von axial verlaufenden Rinnen (33) kreisförmigen Querschnitts ausgebildet sind und von der schraubenseitigen Stirnseite in den Aufbau (3) eingelassen sind.

9. Befestigungsvorrichtung nach Anspruch 7, dadurch gekennzeichnet, daß die Kugelpfannen (31) nach Art von axial konisch verlaufenden Rinnen (34) kreisförmigen Querschnitts ausgebildet und an den Aufbau (3) radial angeformt sind.

10. Befestigungsvorrichtung nach Anspruch 7, dadurch gekennzeichnet, daß die Kugelpfannen (31) nach Art von axial konisch verlaufenden Rinnen (35) kreisförmigen Querschnitts ausgebildet und an den Aufbau (3) radial befestigt sind.

11. Befestigungsvorrichtung nach Anspruch 6, dadurch gekennzeichnet, daß der Aufbau (3) von drei in Axialrichtung nebeneinander angeordneten Ringen gebildet ist, von denen der erste als Stützring (36) ausgebildet ist und die Kappe (2) übergreift, und der zweite und dritte Ring als Lagerring (37, 38) ausgebildet sind, an denen als Kugelpfanne (31) jeweils eine axial konisch verlaufende Rinne (34) kreisförmigen Querschnitts radial angeformt ist.

## Claims

1. Fixing device for superstructures, in which two screw implants (1) are in each case locked by means of a web (5), on which a web prosthesis can be constructed, characterised in that each web (5) is formed of only two parts, which are infinitely adjustable relative to one another in the axial direction, and in that the two parts are each formed at their free ends as part of a ball joint (31, 53), whose other part is provided at the head (12) of each screw implant (1).

2. Fixing device according to claim 1, characterised in that one part of the web (5) is formed as a sleeve (51) and the other part as a bolt (52) insertable into the sleeve (51), and both parts are formed at their free end as a ball head (53), each being mounted in a ball socket (31) mounted on the head (12) of the screw implant (1).

3. Fixing device according to claim 2, characterised in that the ball head (53) is flattened perpendicular to the axial direction of the sleeve (51) / bolt (52).

4. Fixing device according to claim 2 or 3, characterised in that the transition from the ball head (53) to the sleeve (51) / bolt (52) is formed by a frustum (54), whose larger diameter is equal to the outer diameter of the sleeve (51).

5. Fixing device according to one of claims 2 to 4, characterised in that a mounting (3) is fixed on the head (12) of the screw implant (1), into which a ball socket (31) is countersunk on each diametrically opposite side.

6. Fixing device according to claim 5, characterised in that on the head (12) of the screw implant (1) is a cap (2), which engages over the mounting (3) and is fixed by a screw (4), which axially penetrates the head (12) of the screw implant (1) and whose screw head (43) abuts the outer end face of the mounting (3).

7. Fixing device according to claim 6, characterised in that the mounting (3) is formed as a rotationally symmetrical hollow body (32), which receives the cap (2) in the region of its one end face and is provided with the ball sockets (31) near its other end face.

8. Fixing device according to claim 7, characterised in that the ball sockets (31) are formed in the manner of grooves (33) of circular cross-section extending axially and are countersunk into the mounting (3) from the end face associated with the screw.

9. Fixing device according to claim 7, characterised in that the ball sockets (31) are formed as grooves (34) extending axially and conically and having a circular cross-section, and are radially formed integrally in the mounting (3).

10. Fixing device according to claim 7, characterised in that the ball sockets (31) are formed as grooves (35) of circular cross-section extending axially and conically, and are radially fixed to the mounting (3).

11. Fixing device according to claim 6, characterised in that the mounting (3) is formed of three rings arranged next to one another in the axial direction, the first being formed as a support ring (36) and engaging over the cap (2), and the second and third rings being formed as bearing rings (37, 38) in which, as a ball socket (31), a respective groove (34) of circular cross-section extending axially and conically is radially integrally formed.

## Revendications

1. Dispositif de fixation pour superstructures, dans lequel deux implants à vis (1) sont bloqués chacun au moyen d'une barrette (5), sur laquelle peut être montée une prothèse, caractérisé en ce que chaque barrette (5) est formée seulement de deux parties, qui sont réglables l'une par rapport à l'autre de façon continue en direction axiale, et en ce que les deux parties sont réalisées chacune, à leur extrémité libre, en tant qu'une partie d'une articulation à rotule (31,53), dont l'autre partie est prévue sur la tête (12) de chaque implant à vis (1).

2. Dispositif de fixation selon la revendication 1, caractérisé en ce que l'une des parties de la barrette (5) est réalisée sous la forme d'un manchon (51), l'autre partie sous la forme d'un goujon (52) susceptible d'être introduit dans le manchon (51) et les deux parties sont réalisées chacune, à leur extrémité libre, sous la forme d'une tête sphérique (53), dont chacune d'elles est logée dans une cavité sphérique (31) réalisée dans la tête (12) de l'implant à vis (1).

3. Dispositif de fixation selon la revendication 2, caractérisé en ce que la tête sphérique (53) est aplatie perpendiculairement à la direction axiale du manchon (51)/du goujon (52).

4. Dispositif de fixation selon la revendication 2 ou 3, caractérisé en ce que la jonction de la tête sphérique (53) au manchon (51)/au goujon (52) est formée d'un tronc de cône (54) dont le plus grand diamètre est égal au diamètre extérieur du manchon (51).

5. Dispositif de fixation selon l'une des revendications 2 à 4, caractérisé en ce que, sur la tête (12) de l'implant à vis (1), est fixée une structure (3), dans laquelle est encastrée à chaque fois une cavité sphérique (31) sur deux côtés diamétralement opposés.

6. Dispositif de fixation selon la revendication 5, caractérisé en ce qu'il est prévu sur la tête (12) de l'implant à vis (1) un capuchon (2) qui recouvre la structure (3) et qui est fixé par une vis (4) s'appuyant par sa tête de vis (43) sur le côté frontal extérieur de la structure (3) et traversant axialement la tête (12) de l'implant à vis (1).

7. Dispositif de fixation selon la revendication 6, caractérisé en ce que la structure (3) est réalisée sous la forme d'un corps creux (32) symétrique de révolution, qui reçoit le capuchon (2) dans la région d'un côté frontal et qui est muni des cavités sphériques (31) dans la région de son autre côté frontal.

8. Dispositif de fixation selon la revendication 7, caractérisé en ce que les cavités sphériques (31) sont réalisées en tant que conduits (31) de section circulaire s'étendant axialement et sont encastrées dans la structure (3) par le côté frontal du côté de la vis.

9. Dispositif de fixation selon la revendication 7, caractérisé en ce que les cavités sphériques (31) sont réalisées en tant que conduits (34) de section circulaire s'étendant axialement et coniquement et sont formées radialement sur la structure (3).

10. Dispositif de fixation selon la revendication 7, caractérisé en ce que les cavités sphériques (31) sont réalisées en tant que conduits (35) de section circulaire s'étendant axialement et coniquement et sont fixées radialement sur la structure (3).

11. Dispositif de fixation selon la revendication 6, caractérisé en ce que la structure (3) est formée de trois bagues situées l'une au-dessus de l'autre dans la direction axiale, dont la première est réalisée sous la forme d'une bague d'appui (36), et dont la deuxième et la troisième sont réalisées sous la forme d'une bague de roulement (37,38), dans chacune desquelles est formée radialement, en tant que cavité sphérique (31), un conduit (34) de section circulaire s'étendant axialement et coniquement.
